(19) **Europäisches Patentamt / European Patent Office / Office européen des brevets**

(11) **EP 4 750 019 A1**

(12) # EUROPEAN PATENT APPLICATION

(43) Date of publication:
27.05.2026   Bulletin 2026/22

(21) Application number: 25215973.6

(22) Date of filing: 14.11.2025

(51) International Patent Classification (IPC):
*H04L 41/5022* (2022.01)   *H04L 41/5054* (2022.01)
*H04L 41/0897* (2022.01)   *H04L 41/40* (2022.01)
*H04L 41/0894* (2022.01)

(52) Cooperative Patent Classification (CPC):
**H04L 41/5022; H04L 41/0897; H04L 41/40;**
**H04L 41/5054;** H04L 41/0894

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority:  22.11.2024  IN 202421091120

(71) Applicant: **Tata Consultancy Services Limited**
**Maharashtra (IN)**

(72) Inventors:
• **NADAF, Shameemraj Mohinuddin**
  **560066 Bangalore, Karnataka (IN)**

• **RATH, Hemant Kumar**
  **751024 Bhubaneswar, Odisha (IN)**
• **MISHRA, Garima**
  **560066 Bangalore, Karnataka (IN)**
• **ARLAGADDA, Sai Bhavadeesh**
  **560066 Bangalore, Karnataka (IN)**
• **SUMITI, Sumiti**
  **560066 Bangalore, Karnataka (IN)**
• **RANA, Muskan**
  **560066 Bangalore, Karnataka (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR COGNITIVE RESOURCE AWARE ORCHESTRATION OF SERVICES IN COMMUNICATION NETWORKS**

(57)    Current networks provide extremely low latency and high data rate, but it is not clear how they are to be orchestrated and managed efficiently with optimal utilization of the available resources. There is a need for orchestration method which can adapt to prevailing conditions, implement pre-defined policies, and respond to dynamic changes in the network. Hence, embodiments of present disclosure provide method and system for cognitive resource aware orchestration of services in communication networks which works on top of the underlying SDN and NFV orchestration solutions for enabling better operational efficiency in communication networks.

FIG. 2

EP 4 750 019 A1

**Description**

CROSS-REFERENCE TO RELATED APPLICATIONS AND PRIORITY

The present application claims priority from Indian application no. 202421091120, filed on November 22, 2024.

TECHNICAL FIELD

The present invention generally relates to the field of network orchestration, and, more particularly, to a method and system for cognitive resource aware orchestration of services in communication networks.

BACKGROUND

Communication technologies play a vital role in providing backbone for connectivity between applications/services and the customers. Communication Service Providers (CSPs) offer multiple services such as multimedia, messaging, voice, internet, video and so on for different set of consumers such as enterprises, industries, factories, offices, home users, commercial establishments etc. Often, they are compelled to design or re-design their strategies to meet the ever-increasing demand for bandwidth and realize efficient operations. The CSPs are facing several operational challenges with respect to infrastructure maintenance or upgrade, technology upgrade, high capital investments, revenue margins, changing business requirements, technical staffing, and so on. Additionally, there are further challenges to support smooth functioning of different technologies such as Internet of Things (IoT), fog computing, Multi Access Edge (MEC) computing etc., which are popular and in demand.

Adoption of 5G technology is very promising for the CSPs in terms of the low latency, high data rates and totally software-based approach. The technologies such as Software Defined Network (SDN) and Network Function Virtualization (NFV) along with efficient slicing are considered as the main driving forces for 5G. Moreover, 5G deployment requires a coordinated effort having multi-vendor and multi-tenant environments. However, there are multiple challenges with respect to deployment, configuration, operations, orchestration and control of SDN/NFV based 5G networks. SDN and NFV are complimentary in nature, and they enable functionalities such as fine-grain control, network programmability and virtualization in heterogeneous networks. There is a certain level of maturity with respect to the real-world deployment and usage of SDN and NFV technologies. However, it is uncertain about the response to different kind of catastrophic events that may happen in running networks and how they are going to be managed by SDN/NFV. Further, all the major components of 5G and SDN/NFV are software-based and cloud based, for example the cloud Radio Access Networks (RANs), virtualized CORE network services, SDN controllers, NFV components, Virtualized Infrastructure Managers (VIMs) etc. Hence, apart from the underlying network elements, the core SDN/NFV system elements also need to be managed to handle scale and provide optimal utilization without any major disruptions. Further, the next generation 6G networks rely on transformational changes in cognitive spectrum sharing or new bands allocation, Radio Access Network (RAN) and Core convergence, security/privacy, sensing/actuation etc. Hence, it is very challenging to manage the current 5G and future 6G network operations in an efficient manner for the CSPs.

At present, the legacy or traditional network setups are not equipped to handle the over growing consumer requirements and technology demands. Majority of the CSP activities are executed using traditional Operations Support Systems (OSS) or Business Support Systems (BSS) and infrastructure (radio, compute, and network). The legacy infrastructure consists of plethora of devices from different vendors, and it is a very complex in nature to manage. Any dynamic response, modifications, configurations etc., for addressing the user needs is an uphill task and requires tight integration or coupling between different management entities. Hence, intelligent systems which can operate and employ new techniques are need of the hour. Further, to address the growing consumer needs efficiently, becoming more agile in terms of operations is a key factor. Thus, the OSS/BSS need to act in tandem with new orchestration solutions which are closely integrated with SDN/NFV technologies. This is very beneficial for the communication industry in the long run. Therefore, enabling optimal utilization of the existing set of radio, compute, and networking resources at any geographical location by means of dynamic event driven mechanisms is a prime goal and key to success for the CSPs. In this, the Orchestration plays a vital role in achieving both efficient operations and optimal resources utilization. However, the orchestration is quite complex and has different set of challenges such as (a) ensuring dependability or reliability, (b) providing cost effective solutions, (c) effective management of operational complexity, (d) usage of analytics for optimizations and (e) providing intelligent and adaptive solutions.

SUMMARY

Embodiments of the present disclosure present technological improvements as solutions to one or more of the above-mentioned technical problems recognized by the inventors in conventional systems. For example, in one embodiment, a method for cognitive resource aware orchestration of services in communication networks is provided. The method includes configuring a plurality of Resource Directors (RDs) at a plurality of locations in a network. Each of the plurality of RDs comprise one or more logical work groups (WGs) and each of the one or more WGs are one of: i) one or more partitionable WGs and ii) one or more non-partitionable WGs. Each of the one or more WGs comprise one or more master orchestrators coupled with one or more slave orchestrators, which are further attached to one or more control plane elements. Each of the one or more control plane elements is coupled with one or more data plane elements. Further, the method includes performing, in real-time, a plurality of steps comprising obtaining, via one or more of the plurality of RDs at one or more locations among the plurality of locations, i) one or more service requests, ii) a priority level associated with each of the one or more service requests and iii) a plurality of resource requirements associated with each of the one or more service requests. Each of the plurality of resource requirements is one of: a negotiable resource requirement and a non-negotiable resource requirement. The plurality of steps further comprise checking, via the one or more of the plurality of RDs, resource utilization of the one or more partitionable WGs and determining, via the one or more of the plurality of RDs, instantaneous demand for each category of the one or more control plane elements and one or more data plane elements based on the type of one or more service requests. Further, the plurality of steps comprise triggering, via the one or more of the plurality of RDs, repartitioning of the one or more partitionable WGs if the resource utilization of the one or more partitionable WGs is less than a plurality of predefined peak values and if the plurality of resource requirements are satisfied by the one or more partitionable WGs. The plurality of steps further comprise repartitioning, via the one or more of the plurality of RDs, the one or more partitionable WGs using a heuristic approach and assigning the one or more service requests to the repartitioned WGs according to descending order of the associated priority level. The heuristic approach iteratively partitions a lowest utilized WG among the one or more WGs until either the one or more service requests are accepted completely or until maximum utilization of the one or more WGs is reached. During repartitioning, each category of the one or more control plane elements and the one or more data plane elements are scaled up or scaled down to address the instantaneous demand. Furthermore, the plurality of steps comprise restoring, via the one or more of the plurality of RDs, the one or more partitionable WGs upon completion of the one or more service requests.

In another aspect, a system for cognitive resource aware orchestration of services in communication networks is provided. The system includes: a memory storing instructions; one or more communication interfaces; and one or more hardware processors coupled to the memory via the one or more communication interfaces, wherein the one or more hardware processors are configured by the instructions to configure a plurality of Resource Directors (RDs) at a plurality of locations in a network. Each of the plurality of RDs comprise one or more logical work groups (WGs) and each of the one or more WGs are one of: i) one or more partitionable WGs and ii) one or more non-partitionable WGs. Each of the one or more WGs comprise one or more master orchestrators coupled with one or more slave orchestrators, which are further attached to one or more control plane elements. Each of the one or more control plane elements is coupled with one or more data plane elements. Further, the one or more hardware processors are configured by the instructions to perform, in real-time, a plurality of steps comprising obtaining, via one or more of the plurality of RDs at one or more locations among the plurality of locations, i) one or more service requests, ii) a priority level associated with each of the one or more service requests and iii) a plurality of resource requirements associated with each of the one or more service requests. Each of the plurality of resource requirements is one of: a negotiable resource requirement and a non-negotiable resource requirement. The plurality of steps further comprise checking, via the one or more of the plurality of RDs, resource utilization of the one or more partitionable WGs and determining, via the one or more of the plurality of RDs, instantaneous demand for each category of the one or more control plane elements and one or more data plane elements based on the type of one or more service requests. Further, the plurality of steps comprise triggering, via the one or more of the plurality of RDs, repartitioning of the one or more partitionable WGs if the resource utilization of the one or more partitionable WGs is less than a plurality of predefined peak values and if the plurality of resource requirements are satisfied by the one or more partitionable WGs. The plurality of steps further comprise repartitioning, via the one or more of the plurality of RDs, the one or more partitionable WGs using a heuristic approach and assigning the one or more service requests to the repartitioned WGs according to descending order of the associated priority level. The heuristic approach iteratively partitions a lowest utilized WG among the one or more WGs until either the one or more service requests are accepted completely or until maximum utilization of the one or more WGs is reached. During repartitioning, each category of the one or more control plane elements and the one or more data plane elements are scaled up or scaled down to address the instantaneous demand. Furthermore, the plurality of steps comprise restoring, via the one or more of the plurality of RDs, the one or more partitionable WGs upon completion of the one or more service requests.

In yet another aspect, there are provided one or more non-transitory machine-readable information storage mediums comprising one or more instructions which when executed by one or more hardware processors cause a method for cognitive resource aware orchestration of services in communication networks. The method includes configuring a plurality of Resource Directors (RDs) at a plurality of locations in a network. Each of the plurality of RDs comprise one or more logical work groups (WGs) and each of the one or more WGs are one of: i) one or more partitionable WGs and ii) one or more non-partitionable WGs. Each of the one or more WGs comprise one or more master orchestrators coupled with one or more slave orchestrators, which are further attached to one or more control plane elements. Each of the one or more control plane elements is coupled with one or more data plane elements. Further, the method includes performing, in real-time, a plurality of steps comprising obtaining, via one or more of the plurality of RDs at one or more locations among the plurality of locations, i) one or more service requests, ii) a priority level associated with each of the one or more service requests and iii) a plurality of resource requirements associated with each of the one or more service requests. Each of the plurality of resource requirements is one of: a negotiable resource requirement and a non-negotiable resource requirement. The plurality of steps further comprise checking, via the one or more of the plurality of RDs, resource utilization of the one or more partitionable WGs and determining, via the one or more of the plurality of RDs, instantaneous demand for each category of the one or more control plane elements and one or more data plane elements based on the type of one or more service requests. Further, the plurality of steps comprise triggering, via the one or more of the plurality of RDs, repartitioning of the one or more partitionable WGs if the resource utilization of the one or more partitionable WGs is less than a plurality of predefined peak values and if the plurality of resource requirements are satisfied by the one or more partitionable WGs. The plurality of steps further comprise repartitioning, via the one or more of the plurality of RDs, the one or more partitionable WGs using a heuristic approach and assigning the one or more service requests to the repartitioned WGs according to descending order of the associated priority level. The heuristic approach iteratively partitions a lowest utilized WG among the one or more WGs until either the one or more service requests are accepted completely or until maximum utilization of the one or more WGs is reached. During repartitioning, each category of the one or more control plane elements and the one or more data plane elements are scaled up or scaled down to address the instantaneous demand. Furthermore, the plurality of steps comprise restoring, via the one or more of the plurality of RDs, the one or more partitionable WGs upon completion of the one or more service requests.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for cognitive resource aware orchestration of services in communication networks, according to some embodiments of the present disclosure.

FIG. 2 illustrates an architectural overview of the system of FIG. 1, according to some embodiments of the present disclosure.

FIGS. 3A and 3B, is a flow diagram illustrating a method for cognitive resource aware orchestration of services in communication networks, executed using the system of FIG. 1, according to some embodiments of the present disclosure.

FIG. 4 is a block diagram illustrating components of a master orchestrator, according to some embodiments of the present disclosure.

FIG. 5 is a block diagram illustrating components of a slave orchestrator, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

At present, the legacy or traditional network setups are not equipped to handle the over growing consumer requirements and technology demands. Majority of the Communication Service Provider activities are executed using traditional Operations Support Systems or Business Support Systems and infrastructure (radio, compute, and network). The legacy infrastructure consists of plethora of devices from different vendors, and it is very complex in nature to manage. Any dynamic response, modifications, configurations etc., for addressing the user needs is an uphill task and requires tight integration or coupling between different management entities. Hence, intelligent systems which can operate and employ new techniques are need of the hour. Further, to address the growing consumer needs efficiently, becoming more agile in terms of operations is a key factor. Hence, embodiments of present disclosure provide a system and method for cognitive resource aware orchestration of services in communication networks. For a communication service provider operating in a region, there are multiple locations where resources in terms of data plane elements and control plane elements are deployed. Users connect to the network for their applications or services. The services or applications are of different types and require different types and number of resources. For example, a video service can run with HD or SD type. If the CSP has enough resources, then HD quality video can be provided, else SD quality video needs to be allowed. Therefore, the CSP needs to accept or reject a service request at the beginning. This depends upon the number of resources available in that location or at its nearby locations. Resource allocation usually happens through an orchestration framework, where master and slave orchestrators are used. These orchestrators manage the resources and allocate them to the services as per their requirement and resource availability. These master and slave orchestrators are configured and managed by a logical entity called Resource Director (RD). Initially resource directors (RDs) are configured at various locations in a network. The RDs comprise multiple work groups which further comprise combinations of master and slave orchestrators. The slave orchestrators are further coupled to control plane elements, each connected to different types of data plane elements. In real time, the RDs configured at different locations receive various service requests from consumers or users at those locations. The RDs take cognitive decisions to accept or reject the service requests based on different criteria. The RDs efficiently manage the network operations with the help of the work groups as described herein.

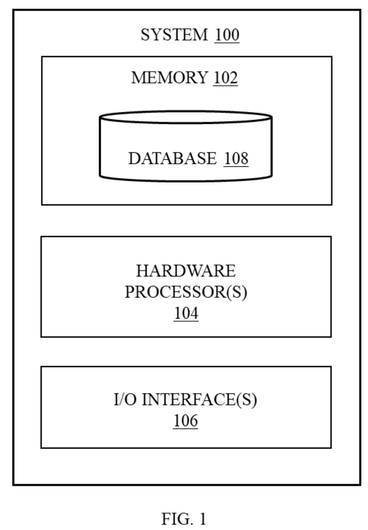

Referring now to the drawings, and more particularly to FIGS. 1 to 5, where similar reference characters denote corresponding features consistently throughout the figures, there are shown preferred embodiments, and these embodiments are described in the context of the following exemplary system and/or method.

FIG. 1 illustrates an exemplary block diagram of a system for cognitive resource aware orchestration of services in communication networks, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

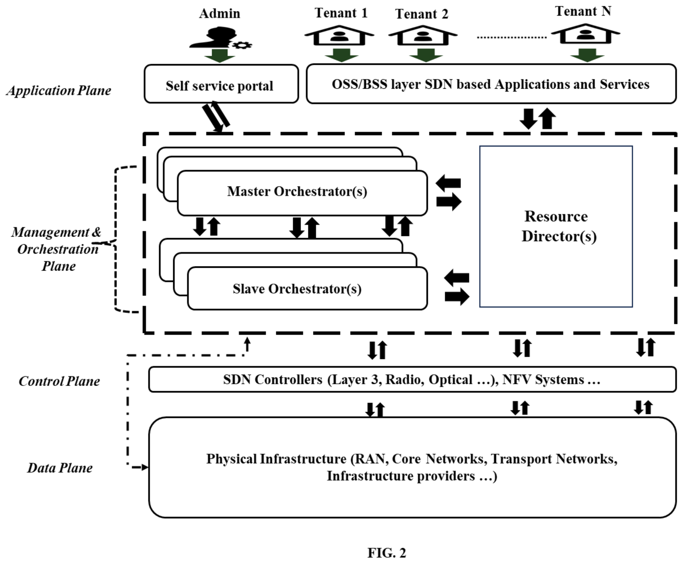

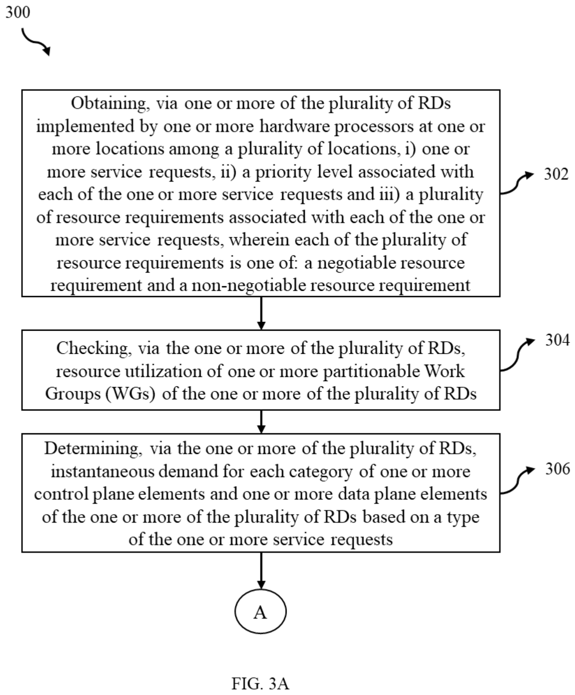

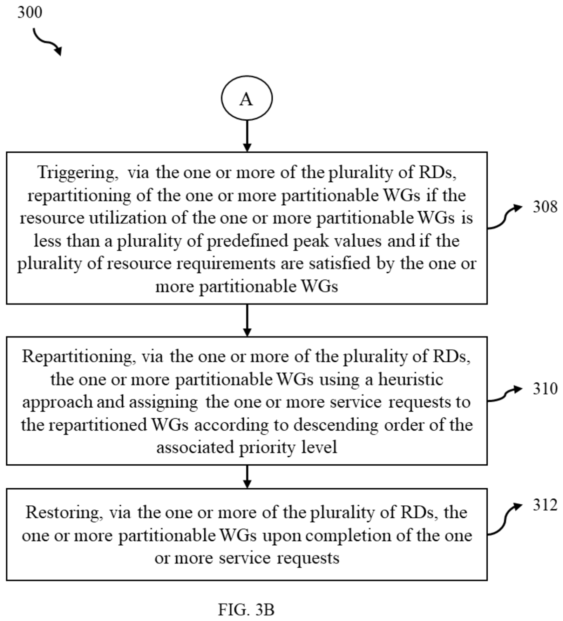

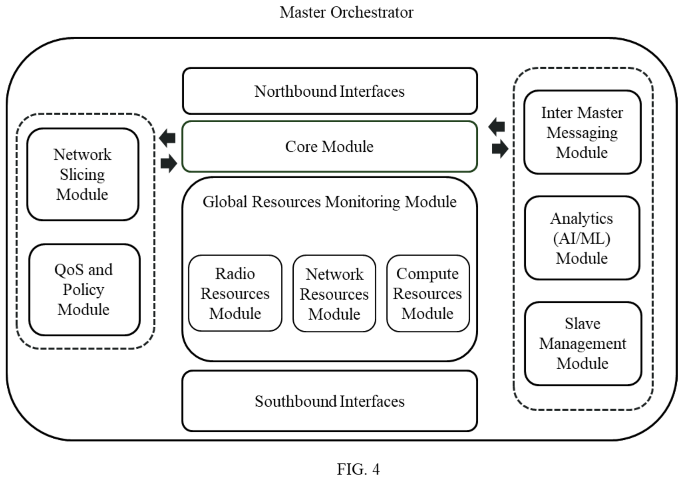

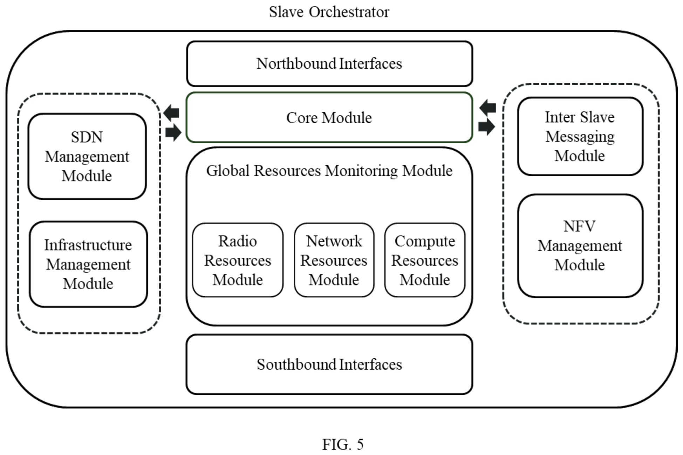

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with architecture diagram of FIG. 2, flow diagram depicted in FIGS. 3A and 3B, and block diagrams of FIGS. 4 and 5, for the cognitive resource aware orchestration of services in communication networks.

The operational activities in communication networks are broadly classified into three logical planes with different services and capabilities as per the Open Networking Foundation (ONF) standardized Software Defined Networking (SDN) architecture. The three logical planes include a data plane, a control plane and an application plane. However, in order to address the drawbacks of the conventional SDN architecture, embodiments of present disclosure introduces a management and orchestration plane in between the control plane and the application plane to facilitate smooth and seamless operations based on criteria either defined by CSPs or derived from the prevailing network conditions. FIG. 2 illustrates an architectural overview of the system of FIG. 1, according to some embodiments of the present disclosure. The architecture depicted in FIG. 2 has four logical planes, namely, an application plane, a management and orchestration plane, a control plane and a data plane.

The application plane comprises of mostly the high level SDN applications and services with OSS/BSS layer functions such as request handling, order management, topology services, inventory management, assurance with fault management, services management, billing and so on. The typical Service Requests (SRs) for access to resources by different tenants are handled by this plane based on 5G service categories: (a) enhanced mobile broadband (eMBB), (b) Ultra-reliable low-latency communications (URLLC) and (c) massive machine-type communication (mMTC), and any other categories for future networks. Further, self-service portals to interact with orchestration entities particularly for administrators/advanced users to generate custom SRs and other modifications fall under this plane.

The control plane comprises of the elements such as SDN controllers, NFV components, vendor management entities and so on. Activities of this plane are mainly focused on aspects such as virtualization, coexistence, interoperability, smooth functions, service chaining, seamless operations, network analytics. Since most of these solutions are software-based components aimed to provide efficient services with cost-optimizations, there is need to monitor them and make necessary interventions to maintain desired performance with reliability. The primitive compute infrastructure required for hosting the SDN and NFV components are provided at suitable locations in the data plane. All the activities in this plane are monitored and managed by the management and orchestration plane.

The data plane comprises of the elements such as 5G RAN components, 5G core components, transport network, infrastructure providers (private, public and hybrid clouds) and any other sources of compute or network infrastructure. All the resources available in this plane are broadly categorized into 3 types: i) radio resources, ii) network resources, and iii) compute resources. The radio resources include network infrastructure related to radio such as Remote Radio Heads or Remote Radio Units (RRHs or RRUs), Base Band Units (BBUs), standalone base stations, network operation centres (NOCs) etc., with focus on parameters such as transmit power, user allocation, beamforming, data rates, handover criteria, modulation scheme, error coding scheme, etc., for realizing optimal Radio Frequency (RF) spectrum utilization. The network resources include SDN based networks (wired, wireless) deployed at enterprise locations, operator NOCs, data centres, cloud etc., and NFV Service Function Chaining (SFC) operations are considered for network resources. The focus here is on allocating sufficient resources required for addressing bandwidth, latency, packet loss and other performance parameters of different SRs coming from higher layers. Network slicing is used in allocation of these resources. The compute resources include computing infrastructure (CPU, memory, storage, network) used for deployment of Virtual Machines (VMs) and Containers (CRs) along with the infrastructure provider platforms such as OpenStack, Kubernetes, OpenShift belong to this category. All the software-based components for 5G, SDN/NFV, orchestration solution are deployed over these compute resources located at different places such as operator NOCs, data centres, cloud locations and any other entities. Application Programming Interfaces (APIs) and other protocols provided by infrastructure providers are utilized by the architecture depicted in FIG. 2 (OpenStack, Kubernetes etc.) for activities such as dynamic deployment, configurations, fault mitigations and so on.

The management and orchestration plane encompasses activities related to overall functions management and events management in the underlying communication networks. Typically, this plane is responsible for providing functionality as a service (XaaS) to the high-level users by means of abstraction, monitoring, configurations, and different workflows management. Further, this plane is also responsible for deployment, configurations, and orchestration of the underlying SDN, NFV and any other network technology components. The method 300 illustrated in FIGS. 3A and 3B operates in this logical plane in conjunction with the components of control plane and data plane.

In an embodiment, the system 100 comprises one or more data storage devices or the memory 102 operatively coupled to the processor(s) 104 and is configured to store instructions for execution of steps of the method 300 depicted in FIGS. 3A and 3B by the processor(s) or one or more hardware processors 104. The steps of the method of the present disclosure will now be explained with reference to the components or blocks of the system 100 as depicted in FIG. 1, the architecture diagram of FIG. 2, flowchart of FIGS. 3A and 3B and block diagrams of FIGS. 4 and 5 for cognitive resource aware orchestration of services in communication networks. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

FIGS. 3A and 3B is a flow diagram illustrating a method 300 for cognitive resource aware orchestration of services in communication networks, executed using the system of FIG. 1, according to some embodiments of the present disclosure. Method 300 is performed in real time continuously. In order to execute the method 300, it is important to perform an initial configuration where a plurality of Resource Directors (RDs) are configured at a plurality of locations in a network. Each of the plurality of RDs comprise one or more logical work groups (WGs). The WGs are either partitionable or non-partitionable. The partitionable WGs are allowed to be shared with multiple service requests, and the non-partitionable WGs cannot be shared with multiple service requests, i.e., they are dedicated to a particular service request. Each of the one or more WGs comprise one or more master orchestrators coupled with one or more slave orchestrators. Each of the one or more slave orchestrators is attached to one or more control plane elements. Each of the one or more control plane elements is coupled with one or more data plane elements. In simple words, each location has one RD. One master can have one or more slave orchestrators. One RD can have one or more master-slave combinations. Each slave orchestrator can have one or more control plane elements. Each Control plane element can have one or more data plane elements. Also, the one or more control plane elements belong to different categories such as SDN controllers, NVF components, vendor management software, open source management software, etc. The one or more data plane elements belong to different categories such as routing or forwarding, traffic engineering, etc.

Mathematically, each WG is a combination of elements as described in equation 1. Further, each WG is a combination of partitionable and non-partitionable WGs as given in equation 2, wherein $WG_P$ is a set of partitionable WGs and $WG_{NP}$ is a set of non-partitionable WGs. The percentage of partitionable and non-partitionable WGs at a particular location is decided by a network administrator.

$$WG = \begin{cases} x_i \ master \ orchestrators, x_i \geq 1 \\ x_i y_j \ slave \ orchestrators, y_j \geq 1 \\ x_i y_j N_x \ control \ plane \ elements, N_x \geq 1 \\ x_i y_j N_x N_y \ data \ plane \ elements, N_y \geq 1 \end{cases} \ \cdots (1)$$

$$WG \ set \in \{WG_P, WG_{NP}\} \quad \cdots (2)$$

At a particular instance of time $t_t$, RD partitions or combines $L$ WGs $L \geq 1$ into $(L \pm x)$ WGs with the objective as given by equation 3, wherein $x$ is number of new partitions to be formed or number of partitions to be combined/restored to accommodate dynamic service requirements obtained in real time at a particular location. The optimization problem described in equation 3 is a NP hard problem and complex to solve in real time which is done using a heuristic approach as described in method 300. In equation 3, $U_{CP(type)}$ is utilization of control plane elements of a particular type/category, $U_{CP_{th}(type)}$ is maximum utilization or peak utilization value of control plane elements defined by administrator, $U_{DP(type)}$ is utilization of data plane elements of a particular type/category, and $U_{th(type)}$ is maximum utilization or peak utilization value of data plane elements defined by administrator.

$$min(L \pm x)$$

$$subject \ to \ \begin{cases} 0 \leq U_{CP(type)} \leq U_{CP_{th}(type)} \\ 0 \leq U_{DP(type)} \leq U_{DP_{th}(type)} \end{cases}, where \ type \geq 1 \ldots (3)$$

The Resource Director (RD) is responsible for management of WGs (alternately referred to as clusters) including dynamic deployment or provisioning of master and slave orchestrators, interactions with different master orchestrators and dynamic deployment or provisioning of control plane and data plane elements, and dynamic sharing of the control and data plane elements between service requests. The RDs are deployed at specific locations such as operator NOCs, data centres, cloud locations, radio infrastructure site locations etc. At each location there are resources (in terms of bandwidth, compute resources, storage, etc.) available for provisioning the network services (alternatively referred to as service requests). A combination of certain data plane elements and control plane elements is required for fulfilling different type of network services. For example, an RD at location L1 provisions $N_x$ control plane elements and $N_y$ data plane elements where $N_x$ is total number of control plane element categories and $N_y$ is total number of data plane element categories. Degree of association factors $DRc$ (default value 1) determines relationship between control plane elements and slave orchestrators whereas and $DRs$ (default value 1) determines relationship between slave and master orchestrators. Thus, RD provisions $DRc \times N_x$ slave orchestrators with $DRs \times DRc \times N_x$ master orchestrators and do the necessary configurations to $Nx$ control plane elements. RDs belonging to different location co-ordinate with each other via messages exchange.

FIG. 4 is a block diagram illustrating components of a master orchestrator, according to some embodiments of the present disclosure. The master orchestrator acts as head of a WG and is responsible for consolidated monitoring and management of resources (radio, network, and compute) assigned to the WG along with slave interactions. It receives Service Requests (SRs) from the OSS/BSS and other applications/services and allocates them to corresponding slave orchestrators. Different modules of the master orchestrator and their functions are shown in Table 1 and FIG. 4. In an embodiment, to handle master failure at runtime, a pair of master orchestrators (primary and secondary) are assigned for each WG. Whenever the primary master orchestrator fails, the secondary immediately starts operations since the state and context exchange is taking place between the two at periodic intervals. Further, the RD deploys another master for that WG to keep things steady.

Table 1

| Module Name | Description |
|---|---|
| Core Module | Responsible for management of all the activities of the master orchestrator like data management, interfaces management, fault management, service requests handling, issue management, AAA, tracing etc. |
| Resource Monitoring Module (RMM) | Collects and consolidates information about availability and state of the resources (radio, network and compute) from multiple underlying networks or infrastructure assigned to different slave orchestrators. |

(continued)

| Module Name | Description |
|---|---|
| North Bound (NB) & South Bound (SB) Interfaces | These two modules are responsible for providing suitable communication with high level and low level layers by means of APIs, specific protocols and other methods. |
| Network Slicing Module | Performs slicing and related configurations based on the requirements and the current state of the resources. |
| QoS & Policy Module | Enables enforcement of the Service Level Agreements (SLAs), Quality of Service (QoS) and other policy rules in underlying networks. |
| Analytics (AI/ML) Module | Performs analytics on the information collected from underlying network or infrastructure elements for assisting in optimized decision making. |
| Slave Management Module | Manages the life cycle of one or more slave orchestrators such as configuration, activation/deactivation, monitoring etc. |
| Inter Master Messaging Module | Enables context and state related messages exchange between different master orchestrators. |

FIG. 5 is a block diagram illustrating components of a slave orchestrator, according to some embodiments of the present disclosure. The slave orchestrator (alternately referred to as worker orchestrator) is responsible for monitoring and management of a segment of resources (radio, network, and compute) assigned to it by the corresponding master orchestrator. The SDN/NFV components and the infrastructure providers (OpenStack, Kubernetes, OpenShift etc.) pertaining to the assigned segment are managed by the slave. Different modules of the slave orchestrator and their functions are shown in Table 2.

Table 2

| Module Name | Description |
|---|---|
| Core Module | Responsible for management of all activities of the Slave Orchestrator like SDN/NFV/other interactions, data management, fault management, master orchestrator interactions etc. |
| Resource Monitoring Module (RMM) | Collects information about availability and state of the resources (radio, network and compute) from networks or infrastructure assigned by corresponding master orchestrator. |
| North Bound (NB) & South Bound (SB) Interfaces | These two modules are responsible for providing suitable communication with high level and low level layers by means of APIs, specific protocols and other methods. |
| SDN Management Module | Manages SDN controllers corresponding to networks assigned by corresponding master orchestrator. |
| NFV Management Module | Manages NFV components assigned by corresponding master orchestrator. |
| Infrastructure Management Module | Manages infrastructure via the providers assigned by corresponding master orchestrator. |
| Inter slave messaging Module | Enables context and state related messages exchange between different slave orchestrators. |

Once the RDs are configured at different locations, steps of the method 300 are performed via one or more of the plurality of RDs implemented by the one or more hardware processors at one or more locations among the plurality of locations. At step 302, the one or more of the plurality of RDs obtain i) one or more service requests, ii) a priority level associated with each of the one or more service requests and iii) a plurality of resource requirements associated with each of the one or more service requests. Each of the plurality of resource requirements is one of: a negotiable resource requirement and a non-negotiable resource requirement. The priority level is either a numerical value indicating priority of the service request or one of i) high, ii) medium, and iii) low. High priority service requests will get dedicated WGs with minimal sharing whereas the medium or low priority ones will get WGs which are shared to maximum level.

At step 304, the one or more of the plurality of RDs check resource utilization of the one or more partitionable WGs using real-time monitoring tools. Since there are several type and number of resources, real-time utilization data is needed to check the WG utilization factor. Further, at step 306, the one or more of the plurality of RDs determine instantaneous demand for each category of the one or more control plane elements and one or more data plane elements based on the type of one or more service requests. At step 308, the one or more of the plurality of RDs trigger repartitioning of the one or more partitionable WGs if the resource utilization of the one or more partitionable WGs is less than a plurality of predefined peak values and if the plurality of resource requirements are satisfied by the one or more partitionable WGs. Next, at step 310, the one or more of the plurality of RDs repartition the one or more partitionable WGs using a heuristic approach and assign the one or more service requests to the repartitioned WGs according to descending order of the associated priority level. The heuristic approach iteratively partitions a lowest utilized WG among the one or more WGs until either the one or more service requests are accepted completely or until maximum utilization of the one or more WGs is reached. During repartitioning, each category of the one or more control plane elements and the one or more data plane elements are scaled up or scaled down by the one or more RDs to address the instantaneous demand. Finally, at step 312, the one or more of the plurality of RDs restore the one or more partitionable WGs upon completion of the one or more service requests.

Suppose the plurality of resource requirements cannot be satisfied by the one or more partitionable WGs, then, the one or more of the plurality of RDs check following conditions are satisfied: i) the plurality of resource requirements are negotiable and, ii) resources available at the one or more partitionable WGs are within a negotiable limit. If these conditions are satisfied, then the steps of triggering repartitioning, repartitioning, serving the service requests by the repartitioned WGs and restoring (steps 304D to 304F) are executed. Otherwise, suppose the plurality of resource requirements are non-negotiable, then, the associated one or more service requests are rejected. For example, suppose there are $U$ number of service requests at a particular time instant among which $I$ requests are negotiable in terms of the control plane and data plane requirements. If there are certain set of partitionable WGs available for allocation, then for the $I$ requests RD will provide full or partial service by means of WGs repartitioning and the $U - I$ set of service requests will be rejected by the RD since they are non-negotiable and the available WGs do not have sufficient resources to satisfy the requirements of these service requests.

In an embodiment, if all the one or more partitionable WGs are at peak utilization, then the one or more RDs perform following steps: i) checking utilization of the one or more non-partitionable WGs, ii) mapping a set of non-partitionable WGs from among the one or more non-partitionable WGs to the one or more service requests, and iii) servicing the one or more service requests by the non-partitionable WGs.

In an embodiment, if the utilization of the one or more WGs at a particular location is equal to or greater than the plurality of predefined peak values, then, the one or more service requests at that location are rejected. Alternatively, such requests may be offloaded to another location having least utilization from among the plurality of locations after corresponding RDs arrive at consensus. The rejected service requests are completely dropped if there is no consensus between corresponding RDs due to individual utilization exceeding corresponding predefined peak values.

The significant benefits of embodiments of present disclosure are as follows:

1. Optimal resource utilization: Overall resources (radio, network, and compute) are monitored continuously to understand the behavior over different time periods. With help of analytics on top of the gathered time series data, reports can be generated for providing recommendations and suitable configurations/actions can be performed which lead to optimal usage.

2. Admission control: Based on the availability of the resources, admission control function of accepting, queuing, or rejecting the incoming SRs can be performed.

3. High level SDN and NFV orchestration: Method 300 can perform SDN controller placement with network devices offloading between different controllers. In case of NFV, services such as VNF placement, migration, scalability, assurance, fault mitigation etc., can be made more efficient using the method 300.

4. Catastrophic failure mitigation: Use of the work groups with periodic monitoring of the control plane and data plane elements helps to handle different failure scenarios such as node failure, link failure and any other malfunctions in better manner.

5. Dynamic slicing, QoS and policy management: Based on the SRs, current resources availability, analytics and other insights gathered periodically, method 300 can perform better network slicing for different 5G service categories (eMBB, URLLC and mMTC). Also, QoS related policies and other rules can be applied over the distributed networks and infrastructure. Further, segmentation of the resources (radio, compute, and network) and allocation to different WGs/clusters is beneficial from the cybersecurity perspective.

6. Life cycle management: Activities such as deployment, configurations, AAA (Authentication, Authorization, Accounting), service registry, logging, ticketing, service gateway etc., fall under the ambit of lifecycle management. These are carried out by the RDs with help of the corresponding tools or platforms.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A processor implemented method (300) comprising:

obtaining (302), via one or more of a plurality of Resource Directors 'RDs' implemented by one or more hardware processors at one or more locations among a plurality of locations, i) one or more service requests, ii) a priority level associated with each of the one or more service requests and iii) a plurality of resource requirements associated with each of the one or more service requests, wherein each of the plurality of resource requirements is one of: a negotiable resource requirement and a non-negotiable resource requirement;
checking (304), via the one or more of the plurality of RDs, resource utilization of one or more partitionable Work Groups 'WGs' of the one or more of the plurality of RDs;
determining (306), via the one or more of the plurality of RDs, instantaneous demand for each category of one or more control plane elements and one or more data plane elements of the one or more of the plurality of RDs based on a type of the one or more service requests;

triggering (308), via the one or more of the plurality of RDs, repartitioning of the one or more partitionable WGs if the resource utilization of the one or more partitionable WGs is less than a plurality of predefined peak values and if the plurality of resource requirements are satisfied by the one or more partitionable WGs;

repartitioning (310), via the one or more of the plurality of RDs, the one or more partitionable WGs using a heuristic approach and assigning the one or more service requests to the repartitioned WGs according to descending order of the associated priority level, wherein the heuristic approach iteratively partitions a lowest utilized WG among the one or more WGs until either the one or more service requests are accepted completely or until maximum utilization of the one or more WGs is reached, and wherein during repartitioning, each category of the one or more control plane elements and the one or more data plane elements are scaled up or scaled down to address the instantaneous demand; and

restoring (312), via the one or more of the plurality of RDs, the one or more partitionable WGs upon completion of the one or more service requests.

2. The processor implemented method as claimed in claim 1,

wherein the plurality of Resource Directors 'RDs' are configured at the plurality of locations in a network, wherein each of the plurality of RDs comprise one or more logical work groups 'WGs', wherein each of the one or more WGs are one of: i) the one or more partitionable WGs and ii) one or more non-partitionable WGs, wherein each of the one or more WGs comprise one or more master orchestrators coupled with one or more slave orchestrators, wherein each of the one or more slave orchestrators is attached to the one or more control plane elements, and wherein each of the one or more control plane elements is coupled with the one or more data plane elements; and wherein the one or more partitionable WGs are allowed to be shared with multiple service requests, and wherein the one or more non-partitionable WGs cannot be shared with multiple service requests.

3. The processor implemented method as claimed in claim 1, wherein if the plurality of resource requirements cannot be satisfied by the one or more partitionable WGs, performing:

checking, via the one or more of the plurality of RDs, if a plurality of conditions are satisfied, wherein the plurality of conditions comprise: i) the plurality of resource requirements are negotiable and, ii) resources available at the one or more partitionable WGs are within a negotiable limit;

triggering, via the one or more of the plurality of RDs, repartitioning of the one or more partitionable WGs if the plurality of conditions are satisfied;

repartitioning, via the one or more of the plurality of RDs, the one or more partitionable WGs by using the heuristic approach to obtain a plurality of repartitioned WGs;

servicing the one or more service requests by the plurality of repartitioned WGs; and

restoring, via the one or more of the plurality of RDs, the one or more partitionable WGs upon completion of the one or more service requests.

4. The processor implemented method as claimed in claim 3, comprising rejecting the associated one or more service requests if the plurality of resource requirements are non-negotiable.

5. The processor implemented method as claimed in claim 1, wherein if all the one or more partitionable WGs are at peak utilization, performing:

checking, via the one or more of the plurality of RDs, utilization of the one or more non-partitionable WGs;

mapping, via the one or more of the plurality of RDs, a set of non-partitionable WGs from among the one or more non-partitionable WGs to the one or more service requests; and

servicing, via the one or more of the plurality of RDs, the one or more service requests by the non-partitionable WGs.

6. The processor implemented method as claimed in claim 1, comprising rejecting the one or more service requests if the utilization of the one or more WGs is equal to or greater than the plurality of predefined peak values.

7. The method as claimed in claim 6, wherein rejected service requests at a location among the plurality of locations are offloaded to another location having least utilization from among the plurality of locations after corresponding RDs arrive at consensus, and wherein the rejected service requests are completely dropped if there is no consensus between corresponding RDs due to individual utilization exceeding corresponding predefined peak values.

8. A system (100), comprising:

a memory (102) storing instructions;

one or more Input/Output (I/O) interfaces (106); and

one or more hardware processors (104) coupled to the memory (102) via the one or more communication interfaces (106), wherein the one or more hardware processors (104) are configured by the instructions to:

obtain, via one or more of a plurality of Resource Directors 'RDs' at one or more locations among a plurality of locations, i) one or more service requests, ii) a priority level associated with each of the one or more service requests and iii) a plurality of resource requirements associated with each of the one or more service requests, wherein each of the plurality of resource requirements is one of: a negotiable resource requirement and a non-negotiable resource requirement;

check, via the one or more of the plurality of RDs, resource utilization of one or more partitionable Work Groups 'WGs' of the one or more of the plurality of RDs;

determine, via the one or more of the plurality of RDs, instantaneous demand for each category of one or more control plane elements and one or more data plane elements of the one or more of the plurality of RDs based on a type of the one or more service requests;

trigger, via the one or more of the plurality of RDs, repartitioning of the one or more partitionable WGs if the resource utilization of the one or more partitionable WGs is less than a plurality of predefined peak values and if the plurality of resource requirements are satisfied by the one or more partitionable WGs;

repartition, via the one or more of the plurality of RDs, the one or more partitionable WGs using a heuristic approach and assigning the one or more service requests to the repartitioned WGs according to descending order of the associated priority level, wherein the heuristic approach iteratively partitions a lowest utilized WG among the one or more WGs until either the one or more service requests are accepted completely or until maximum utilization of the one or more WGs is reached, and wherein during repartitioning, each category of the one or more control plane elements and the one or more data plane elements are scaled up or scaled down to address the instantaneous demand; and

restore, via the one or more of the plurality of RDs, the one or more partitionable WGs upon completion of the one or more service requests.

9. The system as claimed in claim 8,

wherein the one or more hardware processors are configured by the instructions to configure the plurality of Resource Directors 'RDs' at the plurality of locations in a network, wherein each of the plurality of RDs comprise one or more logical work groups 'WGs', wherein each of the one or more WGs are one of: i) the one or more partitionable WGs and ii) one or more non-partitionable WGs, wherein each of the one or more WGs comprise one or more master orchestrators coupled with one or more slave orchestrators, wherein each of the one or more slave orchestrators is attached to the one or more control plane elements, and wherein each of the one or more control plane elements is coupled with the one or more data plane elements; and

wherein the one or more partitionable WGs are allowed to be shared with multiple service requests, and wherein the one or more non-partitionable WGs cannot be shared with multiple service requests.

10. The system as claimed in claim 8, wherein if the plurality of resource requirements cannot be satisfied by the one or more partitionable WGs, performing:

checking, via the one or more of the plurality of RDs, if a plurality of conditions are satisfied, wherein the plurality of conditions comprise: i) the plurality of resource requirements are negotiable and, ii) resources available at the one or more partitionable WGs are within a negotiable limit;

triggering, via the one or more of the plurality of RDs, repartitioning of the one or more partitionable WGs if the plurality of conditions are satisfied;

repartitioning, via the one or more of the plurality of RDs, the one or more partitionable WGs by using the heuristic approach to obtain a plurality of repartitioned WGs;

servicing the one or more service requests by the plurality of repartitioned WGs; and

restoring, via the one or more of the plurality of RDs, the one or more partitionable WGs upon completion of the one or more service requests.

11. The system as claimed in claim 10, comprising rejecting the associated one or more service requests if the plurality of resource requirements are non-negotiable.

12. The system as claimed in claim 8, wherein if all the one or more partitionable WGs are at peak utilization, performing:

checking, via the one or more of the plurality of RDs, utilization of the one or more non-partitionable WGs;
mapping, via the one or more of the plurality of RDs, a set of non-partitionable WGs from among the one or more non-partitionable WGs to the one or more service requests; and
servicing, via the one or more of the plurality of RDs, the one or more service requests by the non-partitionable WGs.

13. The system as claimed in claim 8, comprising rejecting the one or more service requests if the utilization of the one or more WGs is equal to or greater than the plurality of predefined peak values.

14. The system as claimed in claim 13, wherein rejected service requests at a location among the plurality of locations are offloaded to another location having least utilization from among the plurality of locations after corresponding RDs arrive at consensus, and wherein the rejected service requests are completely dropped if there is no consensus between corresponding RDs due to individual utilization exceeding corresponding predefined peak values.

15. One or more non-transitory machine-readable information storage mediums comprising one or more instructions which when executed by one or more hardware processors cause:

obtaining, via one or more of a plurality of Resource Directors 'RDs' at one or more locations among a plurality of locations, i) one or more service requests, ii) a priority level associated with each of the one or more service requests and iii) a plurality of resource requirements associated with each of the one or more service requests, wherein each of the plurality of resource requirements is one of: a negotiable resource requirement and a non-negotiable resource requirement;
checking, via the one or more of the plurality of RDs, resource utilization of one or more partitionable Work Groups 'WGs' of the one or more of the plurality of RDs;
determining, via the one or more of the plurality of RDs, instantaneous demand for each category of one or more control plane elements and one or more data plane elements of the one or more of the plurality of RDs based on a type of the one or more service requests;
triggering, via the one or more of the plurality of RDs, repartitioning of the one or more partitionable WGs if the resource utilization of the one or more partitionable WGs is less than a plurality of predefined peak values and if the plurality of resource requirements are satisfied by the one or more partitionable WGs;
repartitioning, via the one or more of the plurality of RDs, the one or more partitionable WGs using a heuristic approach and assigning the one or more service requests to the repartitioned WGs according to descending order of the associated priority level, wherein the heuristic approach iteratively partitions a lowest utilized WG among the one or more WGs until either the one or more service requests are accepted completely or until maximum utilization of the one or more WGs is reached, and wherein during repartitioning, each category of the one or more control plane elements and the one or more data plane elements are scaled up or scaled down to address the instantaneous demand; and
restoring, via the one or more of the plurality of RDs, the one or more partitionable WGs upon completion of the one or more service requests.

SYSTEM <u>100</u>

MEMORY <u>102</u>

DATABASE <u>108</u>

HARDWARE
PROCESSOR(S)
<u>104</u>

I/O INTERFACE(S)
<u>106</u>

FIG. 1

EP 4 750 019 A1

FIG. 2

15

300

Obtaining, via one or more of the plurality of RDs
implemented by one or more hardware processors at one or
more locations among a plurality of locations, i) one or
more service requests, ii) a priority level associated with
each of the one or more service requests and iii) a plurality
of resource requirements associated with each of the one or
more service requests, wherein each of the plurality of
resource requirements is one of: a negotiable resource
requirement and a non-negotiable resource requirement

302

Checking, via the one or more of the plurality of RDs,
resource utilization of one or more partitionable Work
Groups (WGs) of the one or more of the plurality of RDs

304

Determining, via the one or more of the plurality of RDs,
instantaneous demand for each category of one or more
control plane elements and one or more data plane elements
of the one or more of the plurality of RDs based on a type
of the one or more service requests

306

A

FIG. 3A

300

A

Triggering, via the one or more of the plurality of RDs, repartitioning of the one or more partitionable WGs if the resource utilization of the one or more partitionable WGs is less than a plurality of predefined peak values and if the plurality of resource requirements are satisfied by the one or more partitionable WGs — 308

Repartitioning, via the one or more of the plurality of RDs, the one or more partitionable WGs using a heuristic approach and assigning the one or more service requests to the repartitioned WGs according to descending order of the associated priority level — 310

Restoring, via the one or more of the plurality of RDs, the one or more partitionable WGs upon completion of the one or more service requests — 312

FIG. 3B

Master Orchestrator

FIG. 4

Slave Orchestrator

Northbound Interfaces

Core Module

SDN Management Module

Infrastructure Management Module

Global Resources Monitoring Module

Radio Resources Module

Network Resources Module

Compute Resources Module

Inter Slave Messaging Module

NFV Management Module

Southbound Interfaces

FIG. 5

Europäisches
Patentamt
European
Patent Office
Office européen
des brevets

# EUROPEAN SEARCH REPORT

**Application Number**

EP 25 21 5973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VILLOTA-JACOME WILLIAM F. ET AL: "Admission Control for 5G Core Network Slicing Based on Deep Reinforcement Learning", IEEE SYSTEMS JOURNAL, vol. 16, no. 3, 30 September 2022 (2022-09-30), pages 4686-4697, XP093378071, US ISSN: 1932-8184, DOI: 10.1109/jsyst.2022.3172658 | 1,4,6,8, 11,13,15 | INV. H04L41/5022 H04L41/5054 H04L41/0897 H04L41/40 ADD. H04L41/0894 |
| A | * chapters III, IV, VI * | 2,3,5,7, 9,10,12, 14 | |
| | ----- | | |
| A | Menglan Jiang ET AL: "Network slicing management & prioritization in 5G mobile systems", European Wireless 2016, 22 May 2016 (2016-05-22), pages 197-202, XP055395285, Retrieved from the Internet: URL:http://ieeexplore.ieee.org/ielx7/74992 49/7499250/07499297.pdf [retrieved on 2017-08-01] * chapter I * | 1-15 | |
| | ----- | | **TECHNICAL FIELDS SEARCHED (IPC)** H04L |
| A | XP055512308 * chapter 4.4 * | 1-15 | |
| | ----- | | |

The present search report has been drawn up for all claims

| Place of search | Date of completion of the search | Examiner |
|---|---|---|
| Munich | 23 March 2026 | Bertsch, Andreas |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421091120